(19)

Europäisches Patentamt

European Patent Office

Office européen des brevets

(11) **EP 3 056 023 B1**

(12) **EUROPEAN PATENT SPECIFICATION**

(45) Date of publication and mention
of the grant of the patent:
**06.09.2017 Bulletin 2017/36**

(21) Application number: **14784427.8**

(22) Date of filing: **10.10.2014**

(51) Int Cl.:
***H04R 29/00*** *(2006.01)*

(86) International application number:
**PCT/EP2014/071810**

(87) International publication number:
**WO 2015/052333 (16.04.2015 Gazette 2015/15)**

(54) **MODULE, SYSTEM AND METHOD FOR DETECTING ACOUSTICAL FAILURE OF A LOUDSPEAKER**

MODUL, SYSTEM UND VERFAHREN ZUM ERMITTELN VON AKUSTISCHEM VERSAGEN EINES LAUTSPRECHERS

MODULE, SYSTÈME ET PROCÉDÉ À LA DÉTECTION D'UN DÉFAUT ACOUSTIQUE D'UN HAUT-PARLEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.10.2013 NL 2011583**

(43) Date of publication of application:
**17.08.2016 Bulletin 2016/33**

(73) Proprietor: **Wwinn B.V.**
**7601 PR Almelo (NL)**

(72) Inventors:
• **WIJNANT, Ysbrand Hans**
**NL-7546 HG Enschede (NL)**

• **KUIPERS, Erwin Reinder**
**NL-7491 LZ Delden (NL)**
• **SCHUTTE, Jan Henk**
**NL-7521 EC Enschede (NL)**

(74) Representative: **Hylarides, Paul Jacques et al**
**Arnold & Siedsma**
**Bezuidenhoutseweg 57**
**2594 AC Den Haag (NL)**

(56) References cited:
**US-A- 5 567 863          US-A1- 2009 285 405**
**US-A1- 2012 121 098          US-B1- 6 269 318**

**Description**

The present invention relates to a module, system and method for detecting acoustical quality of a sound source.

An example of a sound source is a speaker. One type of speakers used nowadays is the so-called micro-speaker. A micro-speaker is a small speaker usually applied in personal audio devices, such as mobile phones, tablets, laptops, flat screen TV's, hearing aid devices, etcetera. In the art these micro-speakers are also referred to as "loudspeakers" for producing a relatively high sound volume (for instance, suitable for a ringtone or a hands-free call), "receivers" for producing a lower sound volume (for instance, suitable for keeping close to the ear of the user) and "balanced armature receivers" (for instance, suitable for hearing aids).

These micro-speakers are produced in large numbers and need to be tested before they leave the factory. The manufacturing of electronic devices takes place in automated manufacturing systems wherein the individual parts of the electronic devices are collected, assembled and tested. However, unlike the manufacturing process itself, the current test procedure for speakers is not automated. Micro-speakers are tested manually or semiautomatically in a semi-anechoic test box with known acoustic properties. This involves removing the speaker from the assembly line, positioning the speaker in the semi-anechoic test box, performing extensive acoustic measurements, removing the speaker from the test box and arranging the speaker (if the test results are positive) back into the assembly line. This measurement setup is time consuming and complex since it requires the removal of the electronic device from the assembly line. Additionally, the space requirements for a typical semi-anechoic test box prevent in-line testing of the sound source. Furthermore, the results to be achieved by testing the sound sources in a semi-anechoic test box are relatively inaccurate, since it is difficult, specifically at low frequencies, to make a test box sufficiently anechoic. Additionally, the semi-anechoic box may be less suitable for testing some specific failure modes (for instance, high frequency failure modes, specific wave modes). The semi-anechoic box test method is also less suitable for handling low sound pressure levels. Furthermore, the semi-anechoic test method is sensitive to the damping quality of test box and/or sensitive to environmental noise and vibration in general.

US 2009/285405 discloses a method for testing the signal delays of microphones and then categorizing the tested microphones into a plurality of categories.

US 5 567 863 discloses a calibrator for calibrating a microphone wherein use is made of at least two elongated wave guides.

It is an object of the invention to provide a module, system and method wherein the acoustical quality of a sound source can be assessed with high accuracy.

It is an object of the invention to provide a module, system and method wherein at least one of the disadvantages of the current testing procedure is reduced.

It is a further object of the invention to provide a module, system and method wherein acoustic failure of a sound source may be determined in a fast, accurate and reliable manner.

The module, method and system may be applied in a manufacturing process for sound sources. It is therefore a further object of the invention to provide a module, system and method wherein a short feedback loop to control the manufacturing process of the sound sources and/or the electronic devices in which these sound sources are accommodated may be achieved and/or wherein the manufacturing quality of the sound sources may be improved.

It is a still further object of the invention to provide a module, system and method enabling in-line testing of sound sources.

It is a still further object of the invention to provide a module, system and method for an improved detection of malfunctioning sound sources.

According to a first aspect of the invention at least one of the objects is achieved in a module for assessing the acoustical quality of a sound source, the module comprising:

-    a waveguide comprising a duct having a first end and a second end, wherein a sound source support is arranged at the second end of the duct for supporting the sound source during detection the assessment of the acoustical quality;
-    at least three microphones arranged at at least three different longitudinal and angular positions along the waveguide, wherein the microphones are configured to measure the sound pressure inside the duct, the at least one microphone being configured to provide respective microphone signals representative of the measured sound pressure;
-    a signal processing unit configured to process the microphone signals so as to provide at least one measure representative of the acoustical quality of the sound source.

One of the advantages of using a waveguide rather than an anechoic test box is that the waveguide has a larger acoustical impedance, which means a higher sound pressure in relation to a given distortion of the membrane of the speaker. The result is a higher signal-to-noise ratio during detection. Using a waveguide to determine the acoustical characteristics (for instance, the total harmonic distortion and/or the output power) and from the acoustical characteristics the acoustical quality of the sound source will therefore provide improved detection results.

In an embodiment of the invention the signal processing unit is configured to determine that an acoustical failure has occurred when the measure exceeds a predetermined threshold value. Other ways of determining the occurrence of a failure are conceivable as well. For instance, the module may determine the (complex) amplitudes of one or more types of waves inside the waveguide. Determination of a failure may be made dependent on the amplitudes of the waves of a specific wave type.

In embodiments of the invention the signal processing unit is configured to determine from the microphone signals a first wave field component representative of the forward propagating zero order waves and a second wave field component representative of the backward propagating zero order waves. The signal processing unit may further be configured to determine a measure representative of an acoustical failure of the sound source based on the first wave field component and second wave field component (i.e. the so-called higher order modes). In further embodiments the signal processing unit may be configured to use even further wave field components to determine said measure. For instance, the signal processing unit can be configured to determine from the microphone signals a first wave field component representative of the forward propagating zero order waves, a second wave field component representative of the backward propagating zero order waves, a third wave field component representative of the forward propagating higher order waves and a fourth wave field component representative of the backward propagating higher order waves. The signal processing unit may then be configured to determine said based on the first, second, third and fourth wave field component. By measuring also the higher order waves, the forward propagating wave field component and backward propagating wave components can be separated. Once these wave field components have been determined, it is possible for the processing unit (or any similar device) to compensate for the reflection at the first end of the waveguide (the sound source being positioned at the opposing second end of the waveguide) and hence to determine more directly the sound that has actually been emitted by the sound source.

In a further embodiment the processing unit is configured to subtract the backward propagating waves from the forward propagating waves. Assuming that the coefficient of reflection of the sound source itself is 1 and that after a two reflections at the first end the wave field has become zero, the first sound wave emitted by the sound source may be simulated. This first sound wave may provide useful information about the quality of the sound source itself.

A sound source may vibrate in a first vibration mode and in one or more second vibration modes for generating zero order and further order sound waves, respectively.

In further embodiments of the invention the signal processing unit is configured to process the at least one microphone signal so as to provide measures for respectively the zero order waves and higher order waves in the duct and to determine that an acoustical failure has occurred when the measure for the zero order waves exceeds a threshold value. In other embodiments it is determined that a failure has occurred when one or more of the measures for the higher order waves exceed one or more predetermined threshold values. In still other embodiments the determination is based on both the zero order waves and (some of) the higher order waves.

In embodiments of the invention the first end of the duct is an open end. In other embodiments the first end of the duct is absorbing. In case of a fully absorbing first end, the forward travelling waves represent the signal emitted by the speaker. These forward travelling waves may be detected by the microphones in the wall of the duct. The radiation impedance of a speaker mounted in the sound source support is high (relative to the radiation impedance of the sound source in a semi-anechoic box). A high radiation impedance means that small velocities of the speaker's membrane result in high acoustic pressures in the waveguide. Therefore the high radiation impedance improves the signal to noise ratio and thereby the accuracy of the measurement method.

In embodiments of the invention the module comprises one single microphone only. In these embodiments a measure for the acoustical characteristics (and therefore the measure for the acoustical quality) may be obtained, for instance the total harmonic distortion of the sound source. In embodiments with two or more microphones it is possible to separate the forward and backward travelling plane waves. This enables the calculation for further measures which are also representative of the sound source's acoustical behaviour. In further embodiments the number of microphones is even greater, for instance three of more. In these embodiments further separation of waves of different wave modes can be accomplished. This further separation may provide further or different insight in the acoustical behaviour of the sound source.

Especially in embodiments wherein the module comprises a plurality of microphones arranged at different longitudinal and angular positions along the waveguide a suitable separation of waves of different order and/or travelling direction can be accomplished.
wherein the wall of the waveguide comprises a plurality of openings configured to accommodate microphones, the microphones being configured to provide respective microphone signals representative of the measured local sound pressure. In other embodiments, for instance embodiments wherein MEMS microphones are used, the openings can be dispensed with.

In embodiments of the invention the wall of the waveguide comprises a plurality of openings configured to accommodate microphones. The microphones can be arranged inside these openings and the microphones may provide respective microphone signals representative of the measured local sound pressures.

According to an embodiment the waveguide, herein also referred to as the impedance tube, has a generally elongated shape. Although the length of the module may therefore be considerable in some situations, the dimensions in other directions, orthogonal to the longitudinal axis of the waveguide, may be kept relatively small. This may be advantageous in many applications, for instance when the module is to be arranged in an assembly line.

The actual measurement by the microphones and the processing of the microphone signal by the signal processing unit can be performed in a fast manner, typically in less than 3 seconds, for instance less than 1 second or even less than 0,5 second. In some situations several tests need to be performed. Sometimes these test are performed in a parallel manner, in other situations the tests need to be performed in a serial manner. Furthermore, when the electronic devices are assembled automatically on an assembly line, technical measures may be taken to transport the electronic device or at least the speaker thereof to the speaker support of the module and bringing the speaker back to the assembly line after the acoustic measurement has been completed. Use can be made, for instance, of pick-and-place units that enable a fast and accurate transport of the speakers to and from the module. In further embodiments the assembly line, more specifically the pick-and-place unit, is configured to sort the tested sound sources in line with the results of the acoustical characteristics. The sound sources may be sorted in accordance with their individual quality level determined by the present module. The assembly line may also be configured to provide proper packaging of the sound source/electronic device, for instance in a plastic tray or strip (tape on reel).

According to a further embodiment the duct inside the waveguide has an essentially non-absorbing wall and the duct end (termination) opposite the position of the sound source is closed off by acoustic wave absorbing material, such as mineral wool or absorbing foam.

The signal processing unit may be configured to determine a measure for the forward (higher and/or zero order) waves and/or a measure for the backward (higher and/or lower order) waves in the duct. Based on these measures the processing unit may determine whether an acoustical failure has taken place.

The first vibration mode may correspond to a so-called piston vibration mode wherein the sound source generates essentially plane waves in the duct of the waveguide. The one or more second vibration modes of the sound source may correspond to one or more so-called rocky vibration modes wherein the sound source generates essentially higher order waves. At higher frequencies, i.e. above the cut-on frequency, these waves start to propagate in the duct of the waveguide. The two rocky modes are considered to be indicative of a specific kind of failure of the sound source. These higher frequencies cannot be measured in a regular waveguide.

The sound source may vibrate in a third vibration mode corresponding to bending vibration modes of the sound source. Preferably the duct of the waveguide is dimensioned, for instance has a maximum radius, such that the waves produced by the third vibration mode of the sound source are outside the frequency range of interest. The frequency range of interest corresponds to the frequency range in which the sound source needs to have at least a minimum sound quality, for instance the human hearing range (between about 20Hz and 20kHz).

In order to properly measure the pressure distribution within the duct of the waveguide the number of microphones and their positions along the waveguide are calculated to provide the optimum detection results, in the near field, far field or both in the near and far fields. In embodiments of the invention the openings (and therefore also the microphones) are positioned in a predefined pattern of different longitudinal (z) positions and angular ($\theta$) positions along the waveguide. The number of microphones is at least three, preferably at least seven, more preferably at least eleven microphones. In especially preferred embodiments at least seven microphones are positioned at near field positions and/or at least seven other microphones are positioned at far field positions. Far field positions are considered positions at a distance from the sound source (support) at least four times the diameter of the duct of the waveguide. Positions at a smaller distance from the sound source (support) are considered near field positions. The microphones may be distributed evenly over different longitudinal and angular positions along the waveguide, but a more or less unevenly distributed set of microphones may also be employed.

The microphones generate microphone signals that represent the local sound pressure in the duct. Based on the microphone signals from the individual microphones the signal processing unit may determine characteristics of the wave field inside the waveguide. From the characteristics of the wave field the characteristics of the sound source may be derived, wherein the quality of the sound source may be determined from the derived characteristics of the sound source. The signal processing unit may be programmed to process the incoming microphone signals so as to decompose the measured wave field into at least the following waves:

- forward propagating plane waves (i.e. plane waves propagating from the sound source in the direction of the first end of the waveguide);
- backward propagating plane waves (i.e. plane waves propagating from the first end of the waveguide in the direction of the sound source);
- forward propagating higher order waves;
- backward propagating higher order waves.

In a specific embodiment of the invention the decomposition comprises a non-linear optimization, for instance using a least squares optimization norm.

In embodiments of the invention the processing unit calculates the wave amplitudes of at least one of the individual waves, i.e. the amplitudes (depending on the frequency) of at least one of the forward propagating plane wave, the backward propagating plane waves, the forward propagating higher order waves and the backward propagating higher order waves. More specifically and referring to the expressions introduced below, the (complex) amplitude (or phasor) (A) of the forward plane wave, the complex amplitude (B) of the backward plane wave, the complex amplitudes (C, D) of the forward circular wave and the complex amplitudes of the backward circular wave amplitudes (D) and (F) may be determined. The complex amplitudes as function of the frequency for each of these types of waves is determined. The (normalized) amplitudes as function of the frequency constitute measures for respectively the zero order waves (plane waves) and higher order waves (circular waves) in the duct.

Based on the one or more measures for the plane waves the acoustical performance of the sound source may be determined. Based on the one or more measures for the circular waves a determination can be made whether or not an acoustical failure has occurred.

In embodiments of the invention the measures may or may not be normalized. In further embodiments values of one or more of these measures are compared to predetermined threshold values associated with each of the individual measures. When the measure for one or more of the circular waves exceeds a corresponding threshold, it is determined that an acoustical failure has occurred. If the measure does not exceed the threshold, the sound source is considered to function correctly.

The sound source may be a micro-speaker, for instance a loudspeaker or receiver having a width of 2 cm or less. One type of speaker, also referred to as the moving coil receiver, generally comprises a permanent magnet and a voice coil attached to a diaphragm configured to radiate sound, the diaphragm comprising a thin membrane and a stiffened part (dome plate). In other embodiments the speaker is a balanced armature receiver in which the membrane is caused to vibrate using a vibrating pin.

In embodiments of the invention the module is in directions (x,y) orthogonal to the longitudinal direction (z) only slightly larger than the speaker. For example, when the diameter of the speaker is 2 cm, the width of the duct (or the diameter in case of a duct with a circular cross-section) can be as small as 2 cm as well. The overall diameter of the waveguide may be restricted as well, for instance smaller than 3 cm in the example given.

In order to avoid or reduce disturbance of the wave field inside the duct of the waveguide the microphones are preferably flush-mounted in the wall of the waveguide (i.e. flush relative to the inner surface of the wall).

According to second aspect of the invention at least one of the above objects is achieved in a method of assessing acoustical quality of a sound source, for instance a failure of a speaker, the method comprising:

- causing the sound source to generating zero order and further order sound waves in a waveguide;
- measuring the sound pressure at at least three different longitudinal and angular positions along the waveguide using at least three microphones, the at least three microphones providing respective microphone signals representative of the local sound pressure;
- processing the microphone signals to generate at least one measure representative of the acoustical quality of the sound source.

In embodiments of the invention the method comprises determining that an acoustical failure has occurred when the measure exceeds a predetermined threshold value.

In embodiments of the invention the method comprises:

- determining from the microphone signals a first wave field component representative of the forward propagating zero order waves and a second wave field component representative of the backward propagating zero order waves;
- determining a measure representative of an acoustical failure of the sound source based on the first wave field component and second wave field component. By the fact that the measure is determined both on the forward propagating zero order waves and the backward propagating zero order waves the failure may be detected with high accuracy.

In a further embodiment the method comprises:

- determining from the microphone signals a first wave field component representative of the forward propagating zero order waves, a second wave field component representative of the backward propagating zero order waves, a third wave field component representative of the forward propagating higher order waves and a fourth wave field component representative of the backward propagating higher order waves;
- determining a measure representative of an acoustical failure of the sound source based on the first wave field component, the second wave field component, the third wave field component. and the fourth wave field component. By the fact that the measure is determined on different components representative of the forward propagating zero and higher order waves and the backward propagating zero order and higher waves the failure may be detected with an improved accuracy.

The wave field components referred to above can be determined by decomposition of the acoustical wave field measured by the plurality of microphones into its respective wave field components. This wave field decomposition may be calculated by the processing unit based on the measured microphone signals.

The method may comprise processing the at least one microphone signal so as to provide measures for the zero order waves in the duct. In further embodiments also the higher order waves in the duct are determined. In these embodiments generally two or more microphones are used to provide for a suitable separation of the individual waves.

The method may further comprises the determination that an acoustical failure has occurred when the measure for the zero order waves and/or the higher order waves exceed one or more predetermined threshold values.

As mentioned the method may comprise determining a measure for the forward higher order waves propagating from the sound source into the waveguide and/or a measure for the backward higher order waves propagating towards the sound source. The determination of the acoustical failure is then made on basis of the measure for the forward higher order waves and/or the measure for the backward higher order waves.

In embodiments of the invention the method comprises:

- measuring the wave field inside the waveguide;
- decomposing the wave field into at least the following wave field components:
- forward propagating plane waves;
- backward propagating plane waves;
- forward propagating higher order waves;
- backward propagating higher order waves.

Furthermore, for each of the decomposed wave field components a separate measure may be determined. Such measure may, for instance, involve the pressure amplitudes measured by associated microphones.

Decomposing of the wave field is based on the microphone signals from the various microphones and may involve an inversion of a wave field matrix. An approximation of the inversion may be achieved by accomplishing an optimization process, for instance in a least squares optimization process.

According to third aspect of the invention at least one of the above objects is achieved in a system for assessing acoustical quality of sound sources, the system comprising:

- one or more modules as defined herein;
- an assembly line for assembling electronic devices, wherein an electronic device comprises a sound source, the assembly line comprising:
- a conveyor for transporting the electronic device along one or more assembly stations and along the module;
- a pick-and-place unit for picking up a sound source transported along the module and placing the same in the sound source support of the module;

wherein the module is arranged to provide at least one measure representative of the acoustical quality of the sound source placed in the sound source support.

The pick-and-place unit may be configured to pick up each of the sound sources passing by on the conveyor of the assembly line. In other embodiments, however, only a subset of the set of sound sources passing by on the container is selected to be picked up and tested. Furthermore, the processing unit may be configured to immediately start testing the sound source once it has been placed in the sound source support so that the tested sound source becomes available within a relatively short period of time (typically within 3 seconds or less).

The conveyor may be configured to transport the electronic devices and/or the sound sources (loud speakers) in a continuous manner or intermittently. In both cases the test procedure may be performed in such a fast and efficient manner, that the tested sound source may be placed back on the conveyor without the conveyor needing to interrupt transport of the electronic devices/sound sources on the assembly line.

In further embodiments of the invention the waveguide of a module is arranged substantially parallel or even in line with the conveyor, so that little space is needed to accommodate the module in the assembly line. In further embodiments a number of speakers may be tested simultaneously by making use of a parallel transport mechanism for placing (positioning or even mounting) the speakers into the sound source supports of a number of waveguides. The small dimensions of the modules (at least in directions perpendicular to the longitudinal or transport direction) facilitate the arrangement of the module(s) in the assembly line, also in assembly lines having a conveyor for transporting electronic devices/sound sources in a plurality of parallel rows of electronic devices/sound sources simultaneously.

In a further embodiment of the invention the system comprises a removal unit for removing at least the sound source from the assembly line, for instance from the conveyor or the pick-up-unit, when a failure has been detected. The removal unit may be constituted by the pick-and-place unit, but may also be embodied as a separate device. Furthermore, in embodiments of the invention, the defective speaker is first placed back on the conveyor and removed in a further (downstream) part of the assembly line. In other embodiments a defective speaker is removed directly from the assembly line, for instance from the sound source support directly to a defective device/sound source discharge transporter. In these embodiments a short feedback loop quality control may be accomplished.

In further embodiments of the invention the system comprises at least one of:

- a sorter unit for sorting the sound sources into different quality categories and/or failure modes based on the determined acoustical characteristics;
- a packaging unit for packaging into packaging material.

The sorted sound sources may be used for failure mode analysis, while the packing material may make the device suitable for transportation and further process by the final customer.

Further characteristics, advantages and details of the present invention will become apparent from the following description of several embodiments thereof. Reference is made to the annexed drawings, wherein:

- Figure 1 is a schematic representation of various vibration modes of a sound source;
- Figure 2 a cross-section of an embodiment of a module for detecting a defective sound source;
- Figure 3 shows an embodiment of a microphone arrangement for measuring far field sound pressures;
- Figure 4 shows an embodiment of a microphone arrangement for measuring near field sound pressures;
- Figures 5A and 5B show the amplitudes of the zero mode wave component measured in the far field, as function of the sound frequency, in a first and second frequency range, respectively;
- Figures 6A and 5B show the amplitude of different wave components as function of the sound frequency, in the same frequency ranges as figures 5A and 5B, respectively;
- Figures 7A and 7B show the amplitudes of the zero mode wave component measured in the near field, as function of the sound frequency, in a first and second frequency range, respectively;
- Figures 8A and 8B show the amplitude of different wave components as function of the sound frequency, in the same frequency ranges as figures 7A and 7B, respectively; and
- Figure 9 a schematic top view of an embodiment of an assembly line wherein detection modules according to embodiments of the invention are employed.

It is to be understood that this invention is not limited to particular embodiments described. The terminology used herein is for the purpose of describing particular embodiments only, and is not intended to be limiting, since the scope of the present invention will be limited only by the appended claims. Unless defined otherwise, all technical and scientific terms used herein have the same meaning as commonly understood by one of ordinary skill in the art to which this invention belongs. Still, certain elements are defined below for the sake of clarity and ease of reference.

In the description of a few embodiments of the invention the sound source is a speaker, in particular a micro-speaker to be used in an electronic device, for instance a portable electronic device such as a smart phone or a hearing aid. The principles of the present invention may however be applied to other types of sound sources as well. A micro-speaker, in the art also referred to as a receiver, is a small-sized, simple speaker. The speaker may be comprised of a permanent magnet and a voice coil that is attached to a diaphragm to radiate sound. The diaphragm comprises a thin membrane and a stiffened part, referred to as the dome plate. Structurally this dome plate can be approximated by a spring-supported thin plate, where distributed springs are mounted along the full perimeter.

The above described speaker type is also known as a moving coil receiver. Generally, in this type of sound source the coil receives electronic signals and is magnetized. Under the influence of a magnetic field, the coil starts to move (moving coil), which movement creates vibrations in the membrane. Movement of the membrane pressures the air above the membrane, thereby creating sound pressure. Another type of sound sources is the balanced armature receiver. This sound source comprises a coil that receives electric signals. The coil injects flux into the armature which starts to vibrate in the magnetic field. Vibration of the armature causes a drive pin to move. Movement of the drive pin creates a vibration in the membrane, thereby creating sound pressure. Other sound sources can be employed as well and all fall within the scope of the appended claims.

When reference is made to a speaker as an example of a sound source, it is to be understood that in preferred embodiments of the invention a speaker includes a speaker membrane only. The membrane is mounted in the sound source support and its acoustic characteristics are measured using the method and module as described herein. In other embodiments the speaker additionally includes a magnet, voice coil and/or any further associated component.

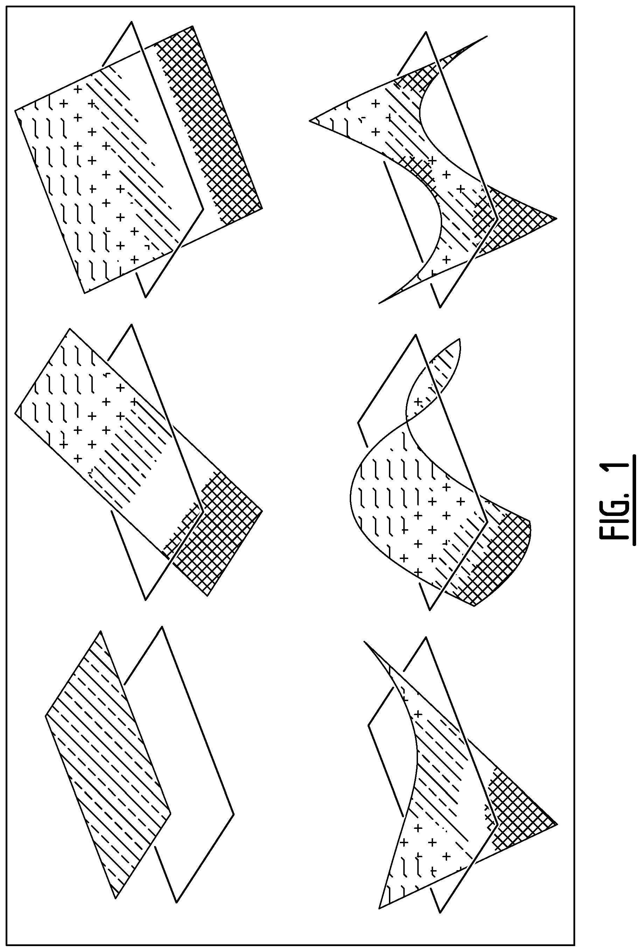

In figure 1 a representation is given of the six lowest vibration modes produced by the membrane of the micro-speaker. The first three modes are so-called rigid body modes, where the plate itself is not deformed. The first vibration mode is the desired vibration pattern, commonly referred to a as piston mode. The second and third vibration modes are the two so-called rocking modes along y and x-axis, respectively. At higher frequencies fourth, fifth and sixth modes or bending modes occur wherein the plate itself starts bending. For a micro-speaker, the efficiency of the piston mode is the most important in the full frequency range. The two rocking modes, which are an indication for speaker failure, are important radiators as well for the higher frequencies. The lowest bending modes contribute to the speaker's sound power at higher frequencies, although these modes are less important from a radiation point of view. The resulting sound waves in the waveguide can be measured and used to identify a rocking mode of the micro-speaker and thereby provide an indication of a possible failure of the micro-speaker.

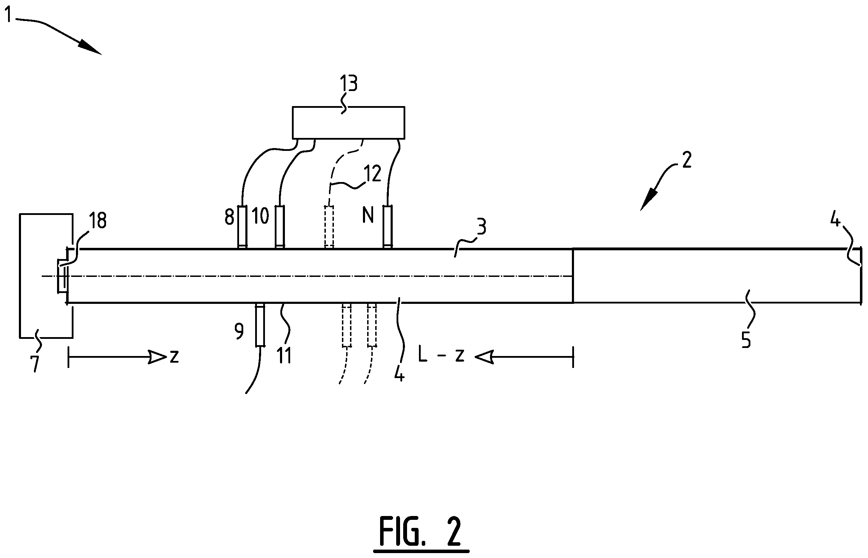

Figure 2 shows an embodiment of a module 1 comprising an elongated waveguide 2 of length L. Inside the waveguide a duct 3 is present. At the back end (first end) the duct 3 is closed by a back plate 4 and sound absorbing material 5. The figure also shows a speaker support 7 (positioned at the second end of the waveguide) into which a speaker 18 may be removably mounted. The membrane of the speaker is positioned at position z=o, while the back plate 4 is positioned at z=L. Multiple microphones 8,9,10..N are flush-mounted in the wall 11 of the waveguide 2 at different longitudinal (z) and radial (x,y) positions. At the duct termination (z = L) reflections are substantially prevented by absorbing material 5. Microphones 8-N are connected with cables 12 to a processing unit 13.

The waves in the waveguide essentially propagate as plane waves. Plane waves are constant over the cross-section of the duct and propagate at a constant speed along the length of the duct. At the so-called cut-on frequency, modes which are not constant over the duct will start propagating. Below the cut-on frequency the mode attenuates exponentially in space, i.e. it is called evanescent. In far-field these evanescent wave modes will not be observed.

In embodiments of the present invention, the higher order modes are separated in order to investigate the failure modes of the speaker, as will be explained in detail hereafter.

The duct 3 can take different shapes in cross-section. In case of a circular waveguide (i.e. a waveguide having a duct with a substantially circular cross-section), the wave propagation may be expressed as:

$$p = \begin{Bmatrix} J_m(k_r r) \\ N_m(k_r r) \end{Bmatrix} \begin{Bmatrix} e^{im\theta} \\ e^{-im\theta} \end{Bmatrix} \begin{Bmatrix} e^{i\beta z} \\ e^{-i\beta z} \end{Bmatrix} \begin{Bmatrix} e^{i\omega t} \\ e^{-i\omega t} \end{Bmatrix} \qquad k_r^2 + \beta^2 = (\omega/c_0)^2$$

wherein $J_m$ and $N_m$ are the Bessel and Neumann functions of the $m^{th}$ kind, respectively. If the microphones are placed in the wall of the waveguide (i.e. r=a, wherein a is the radius of the duct), the first order approximation of the wave equation including the plane wave solution (m=o;n=1) and the first circular waves (m = n = 1) may be expressed as:

$$\begin{aligned} p(\theta, z) = & A\, e^{-ikz} + B\, e^{ikz} \\ & + C\, J_1\left(\alpha'_{11}\right) e^{i\theta - i\beta_{11}z} + D\, J_1\left(\alpha'_{11}\right) e^{i\theta + i\beta_{11}z} \\ & + E\, J_1\left(\alpha'_{11}\right) e^{-i\theta - i\beta_{11}z} + F\, J_1\left(\alpha'_{11}\right) e^{-i\theta + i\beta_{11}z} \end{aligned}$$

where the coefficients A and B represent the (complex) amplitudes of the forward and backward plane wave, respectively. The coefficients C and E represent the forward circular wave amplitudes and D and F represent the backward circular wave amplitudes.

The following system of equations can be obtained for N microphones:

$$\mathbf{Ax = b}$$

wherein

$$\mathbf{A} = \begin{bmatrix} e^{-ikz_1} & e^{ikz_1} & e^{i\theta_1 - i\beta_{11}z_1} & e^{i\theta_1 + i\beta_{11}z_1} & e^{-i\theta_1 - i\beta_{11}z_1} & e^{-i\theta_1 + i\beta_{11}z_1} \\ e^{-ikz_2} & e^{ikz_2} & e^{i\theta_2 - i\beta_{11}z_2} & e^{i\theta_2 + i\beta_{11}z_2} & e^{-i\theta_2 - i\beta_{11}z_2} & e^{-i\theta_2 + i\beta_{11}z_2} \\ \vdots & \vdots & \vdots & \vdots & \vdots & \vdots \\ e^{-ikz_N} & e^{ikz_N} & e^{i\theta_N - i\beta_{11}z_N} & e^{i\theta_N + i\beta_{11}z_N} & e^{-i\theta_N - i\beta_{11}z_N} & e^{-i\theta_N + i\beta_{11}z_N} \end{bmatrix}$$

$$\mathbf{b} = \begin{bmatrix} p_1 \\ p_2 \\ \vdots \\ p_N \end{bmatrix}, \qquad \mathbf{x} = \begin{bmatrix} A \\ B \\ C J_1(\alpha'_{11}) \\ D J_1(\alpha'_{11}) \\ E J_1(\alpha'_{11}) \\ F J_1(\alpha'_{11}) \end{bmatrix}$$

The Moore-Penrose generalized inverse or pseudo-inverse may be taken as an approximate solution of the linear system of equations

$$\mathbf{x}_{ls} = \mathbf{A}^+\mathbf{b} = \left(\mathbf{A}^H\mathbf{A}\right)^{-1}\mathbf{A}^H\mathbf{b}$$

where $\mathbf{A}^+$ the pseudo-inverse of A and $\mathbf{A}^H$ is the Hermitian matrix or conjugate transpose of A. Due to (small) measurement errors, $\mathbf{x}_{ls}$ is the least-squares approximate solution for x. Throughout the present specification the above-described method to separate the individual waves will be referred to as the least-squares method.

If the above described six coefficients A-F of the individual waves are to be determined, at least six microphones should be used. However, the inventors have further found that the use of six microphone positions may lead to an ill-conditioned matrix A for the circular modes below their cut-on frequency. In order to prevent unwanted solutions, an extra restriction has to be made to these circular modes. Below the cut-on frequency, only plane waves are assumed when the microphones are placed at far field positions. In other words, all circular wave amplitudes C, D,E and F are zero by definition. The inventors have further found that preferably at least seven (N=7) microphones are used to obtain finite singular values in the full frequency range of interest.

Whereas the duct 3 of the waveguide has been described earlier as having a circular cross-section, in other embodiments of the module of the invention the duct has a distinct shape. For instance, the duct 3 may take a rectangular or square shape (i.e. a waveguide having a duct with a substantially rectangular or square cross-section, respectively). Similar expressions for the wave equation may apply to these embodiments and are within the reach of the skilled person. Therefore a detailed description of the solutions of the wave equations in case of waveguides with a rectangular or square cross-section is omitted here.

In table 1 below an overview is presented of the cut-on frequency (i.e. frequency of onset) for waveguides of different sizes and different geometries (in cross-section).

Table 1: Frequencies of onset for different cross-sections. Mode O represents the plane wave, modes 1-3 represent higher order circular and rectangular waves

| Mode # | Frequency of onset [Hz] | | | | | |
|---|---|---|---|---|---|---|
| | Circular | | Rectangular (*a/b*=3/2) | | Square (*a/b*=1) | |
| | *2a* [mm] | | *a* [mm] | | *a* [mm] | |
| | 12 | 20 | 12 | 20 | 12 | 20 |
| 0 | 0 | 0 | 0 | 0 | 0 | 0 |
| 1 | 16752 | 10051 | 14292 | 8575 | 14292 | 8575 |
| 2 | 16752 | 10051 | 21438 | 12863 | 14292 | 8575 |
| 3 | 27789 | 16673 | 25765 | 15459 | 20211 | 12127 |

In the table mode O (zero order mode) represents a plane wave. Since the cut-on frequency is zero, this mode is always present. Modes 1 and 2 are the first two circular and rectangular waves which can be taken into account to gain more information about the excitation spectrum. Mode 3 represents the third circular or rectangular wave, which determines the frequency limit of the measurement environment.

Considering the information presented in table 1, it is possible to choose the dimensions of the cross-section of the wave guide such that modes 1 and 2 can be excluded. For instance, a small duct with a diameter 2a < 12 mm allows plane waves propagating only in the frequency range f < 15 kHz. A small number of microphones is sufficient to provide accurate measurement results.

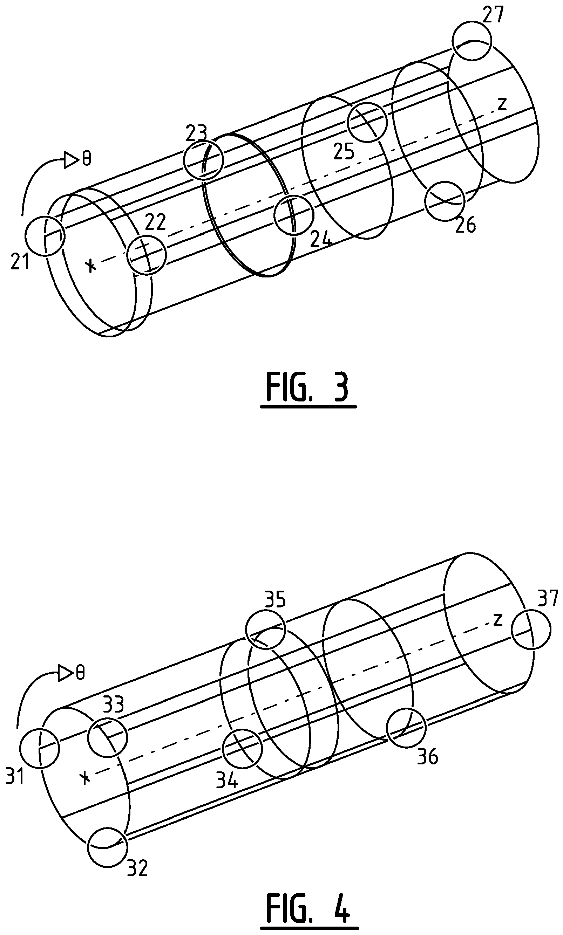

In the following a few examples are described of microphone set-ups in the near field and the far field. Figure 3 shows a microphone setup in the far field (wherein the radius a of the duct is 10 mm, z is the distance of the speaker to the microphone and θ is the angle relative to the first microphone). Microphones 21-27 are positioned at the following positions:

| Mic # | ≈ [mm] | θ [rad] |
|---|---|---|
| 21 | 100.0 | 0.000 |
| 22 | 102.7 | 2.648 |
| 23 | 126.5 | 0.262 |
| 24 | 126.9 | 2.861 |
| 25 | 143.3 | 2.024 |
| 26 | 158.5 | -1.730 |
| 27 | 167.9 | 1.085 |

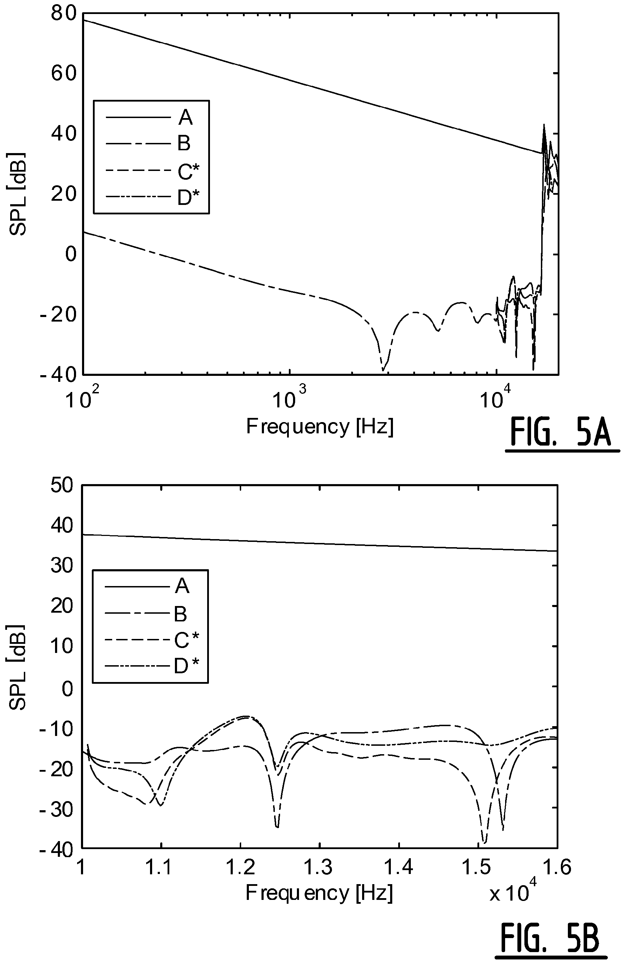

The forward and backward waves can be separated using the above-described expression for $x_{ls}$. Figures 5A and 5B show the wave amplitudes when the speaker is excited in its piston mode and the microphones are arranged in the far field. Figure 5A shows the results in the frequency range from 100 Hz to slightly more than 10 kHz, while figure 5B shows the same results in the frequency range from 10 kHz tot 1,6 kHz. The circular wave components are combined in a forward amplitude C* (complex conjugate of C) and a backward amplitude D* in order to compare them to the plane waves A and B. A separate correction has been applied to the circular waves for correlating the sound power of the circular waves over the cross-section of the duct to the sound power of the plane waves. As can be derived from figures 5A, 5B, the wave components other than the forward propagating plane wave component are 50 to 70 dB lower than the forward propagating wave.

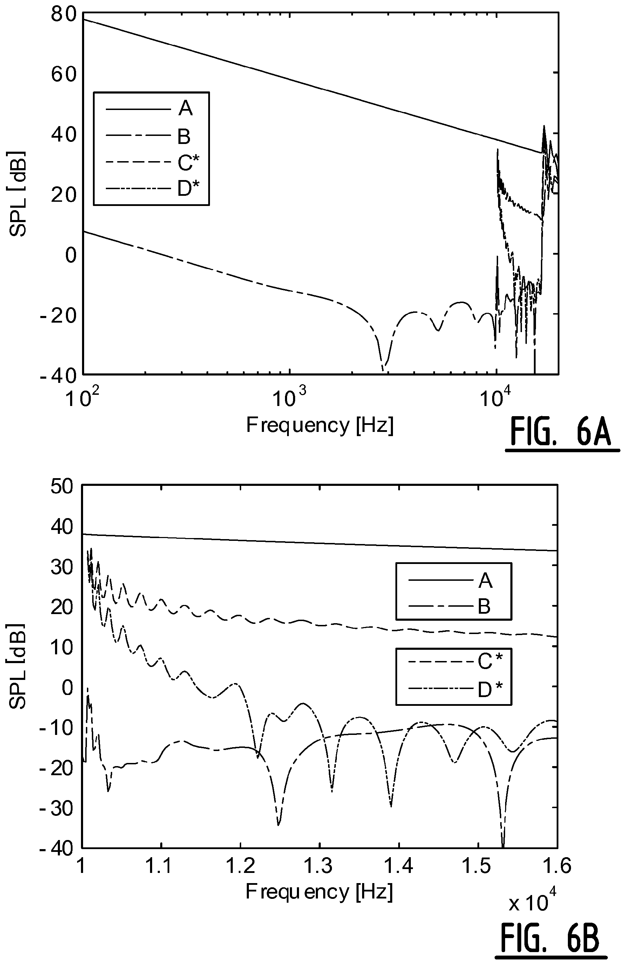

Figures 6A and 6B show the wave amplitudes when the speaker is excited in its piston mode including 10% rocking mode. The forward circular wave components C* are pronounced just above the cut-on frequency. The backward circular wave D* is large. The forward plane wave A is essentially unchanged and circular wave B is changed only marginally. The peak-to-peak distance in the circular wave components is frequency dependent as a result of dispersion.

A similar analysis can be performed for microphones in the near-field of the micro-speaker. Figure 4 shows an example of a microphone setup in the near field. Microphones 31-37 are positioned at the following positions:

| Mic # | ≈ [mm] | θ [rad] |
|---|---|---|
| 31 | 5.0 | 0.000 |
| 32 | 5.0 | -2.105 |
| 33 | 5.0 | 2.103 |
| 34 | 35.8 | -1.038 |
| 35 | 40.6 | 0.906 |
| 36 | 53.3 | -2.588 |
| 37 | 73.9 | 2.803 |

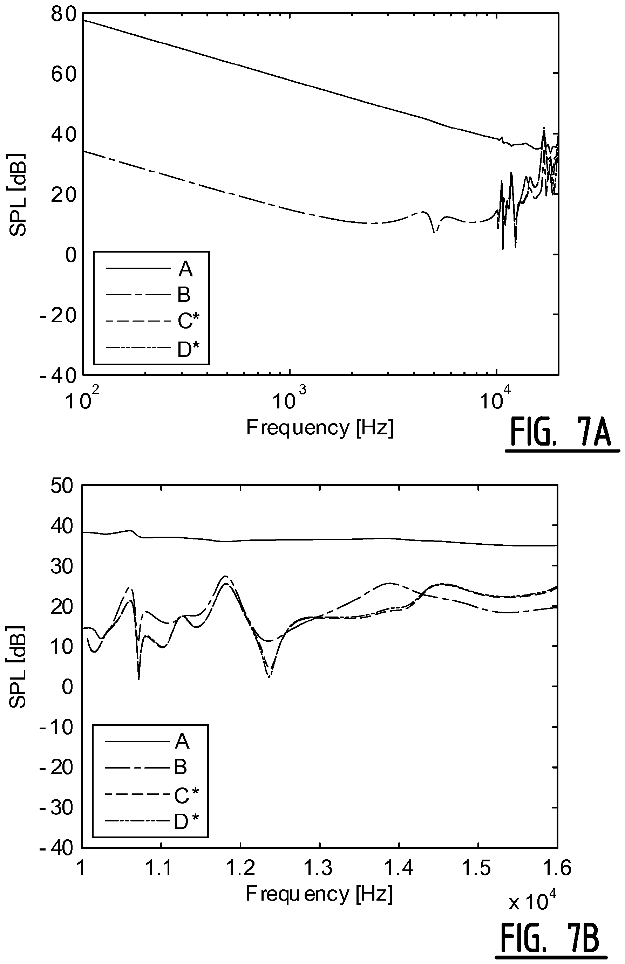

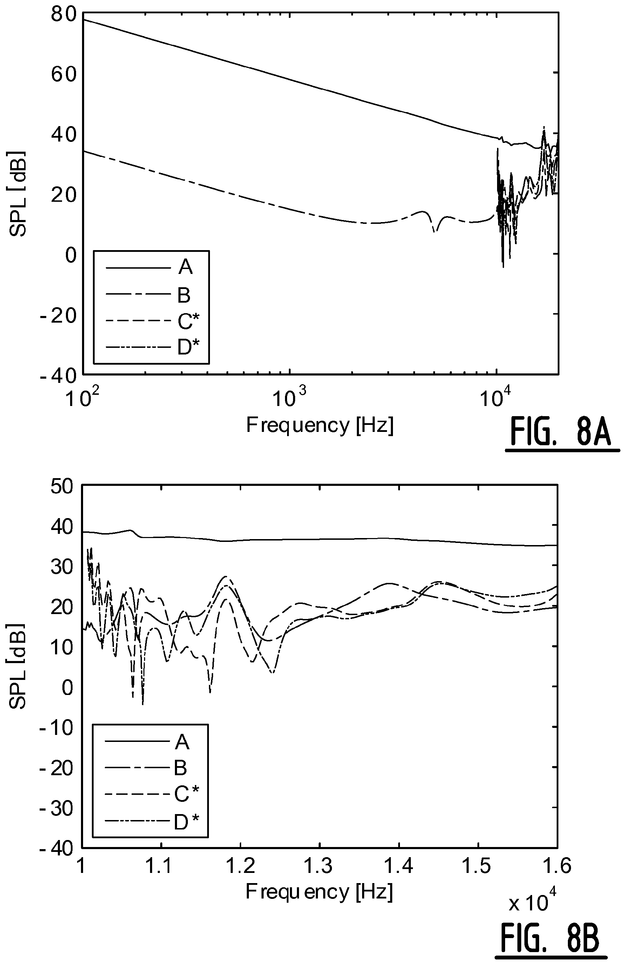

Figures 7A,B and 8A,B show the results of the measurements when the microphones are placed in the near-field. Above the cut-on frequency, the difference between A and B is much smaller compared to the case with the microphones in far-field, as can be seen in figures 5A and 5B. The forward circular waves C* are zero in the evanescent region. The amplitudes C and E, however, can be determined and are finite. The backward circular waves D* are similar to C* above the cut-on frequency. It can be concluded that it may be difficult to separate the circular waves when the microphones are placed in the near-field.

For the excitation including rocking mode, A is not a straight line, like in the far-field measurement. In the near-field measurement, a considerable level of noise is present around 10 kHz. Above the cut-on frequency, C* has a peak in the SPL. At frequencies f > 13 kHz the influence of the higher order modes is getting more and more pronounced.

From the above results follows that the zero order wave and possibly also the higher order wave modes (for instance the first order circular or rectangular modes) in a waveguide can be used to detect failure of a sound source, for instance by comparing them to one or more predefined thresholds. For instance, any rocking (vibration) modes of the sound source which are indicative of a failure of the sound source, can be easily detected by the module.

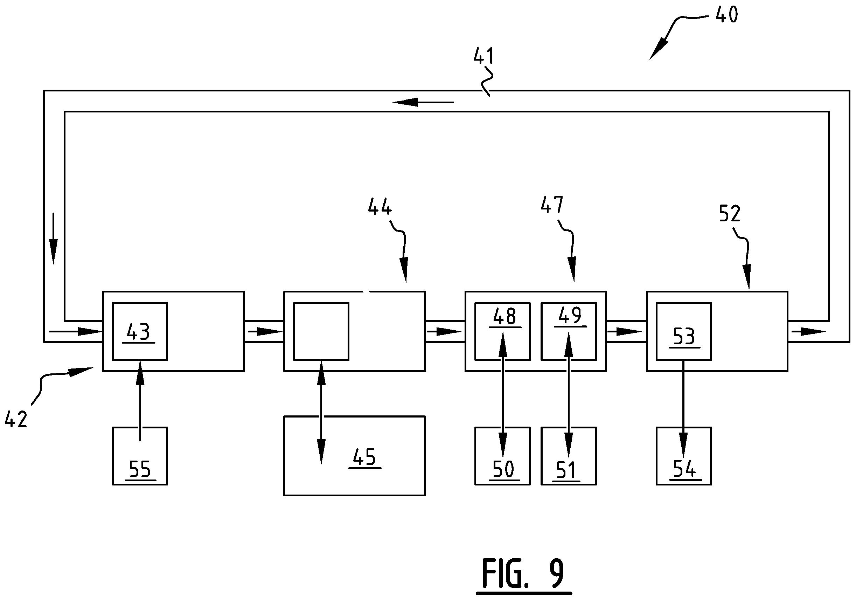

Figure 9 shows an example of an assembly line 40 for the assembly of electronic devices, such as speaker units, mobile phones, PDA's, smart phones, flat TV's, hearing aid devices, etc. The assembly line comprises a carrousel conveyor 41 on which support structures for the loud speaker, for instance a PCB, housing part or similar support structure, or the speaker as such may be transported along several assembly units. The first assembly unit 42 comprises a pick-and-place device 43 which picks up a support structure from a supply 55 and places the structure on the conveyor 41. To the support structure a speaker is mounted. The conveyor transports the support structure towards a second assembly unit 44. The second assembly unit comprises a pick-and-place device 56 that is configured to pick up the support structure with the loud speaker and place the same in a magnetizer 45. Once the speaker has been magnetized the pick-and-place device positions the speaker back onto the conveyor 41. The support structure with speaker is transported in the direction of a third assembly unit 47. The third assembly unit 47 comprises two pick-and-place devices 48,49. The pick-and-place devices 48,49 pick up the even and uneven speakers and bring these speakers to the associated test modules 50,51, respectively. The speakers are tested in the test modules 50,51 (in a time interval shorter than 1,5 s), and then placed back by the respective pick-and-place devices 48,49 on the conveyor 41, irrespective of the outcome of the test procedure. The conveyor 41 then transports the speaker in the direction of a fourth assembly unit 52. The fourth assembly unit 52 comprises a rejection unit 53, for instance a further pick-and-place device. The rejection unit 53 selects the speakers to be rejected and causes the selected speakers to be removed from the conveyor 41, for instance by placing the selected speaker in a rejection bin 54. The remaining speakers are transported for further processing along the assembly line.

In further embodiments of the invention the defective loud speakers are sorted according to their specific failure mode out of a number of possible failure modes. For instance, the pick-and-place device may be controlled to place a selected first speaker in a first rejection bin since a first failure mode has been detected for the first speaker, while a selected second speaker is placed in an another, second rejection bin since it has been determined that the second speaker shows a different, second failure mode. In this manner the speakers (or, more generally, the sound sources) may be sorted according to different failure modes for further analysis.

Due to the small dimensions of the waveguide and the fast and reliable test procedure according to embodiments of the present invention, the assembly of electronic devices having one or more speakers can be considerably improved. Furthermore, it is made possible to test all speakers on the assembly line rather than selecting sample speakers randomly from the conveyor and testing only the selected subset of speakers without essentially impeding the assembly speed of the assembly line. This has a positive effect on the reliability of the assembly operation. The method may also provide for a short feedback loop. For instance, the method makes it possible to detect (repeating) production errors in a fast and reliable manner. Accordingly, the production on the assembly line may be adjusted in a fast and reliable manner as well, depending on the production errors detected. The method also helps the manufacturer to improve his production quality to such an extent that the field-return rate may be reduced considerably.

The processing unit as defined herein may refer to any hardware and/or software combination that will perform the functions required of it. For example, any processing unit may comprise a programmable digital microprocessor such as available in the form of an electronic controller, mainframe, server or personal computer (desktop or portable).

It is noted that, as used herein and in the appended claims, the singular forms "a", "an", and "the" include plural referents unless the context clearly dictates otherwise.

As will be apparent to those of skill in the art upon reading this disclosure, each of the individual embodiments described and illustrated herein has discrete components and features which may be readily separated from or combined with the features of any of the other several embodiments without departing from the scope of the present invention. Any recited method can be carried out in the order of events recited or in any other order which is logically possible.

Accordingly, the preceding description merely illustrates the principles of the invention. It will be appreciated that those skilled in the art will be able to devise various arrangements which, although not explicitly described or shown herein, embody the principles of the invention and are included within its scope. Moreover, all statements herein reciting principles, aspects, and aspects of the invention as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. The scope of the present invention, therefore, is not intended to be limited to the exemplary aspects shown and described herein. Rather, the scope of present invention is embodied by the appended claims.

**Claims**

1. Module (1;50,51) for assessing acoustical quality, for instance detecting acoustical failure, of a sound source (18), the module comprising:

   - a waveguide (2) comprising a duct (3) having a first end and a second end, wherein a sound source support (7) is arranged at the second end of the duct for supporting the sound source during the assessment of the acoustical quality;
   - at least three microphones (8-N; 21-27; 31-37) arranged at at least three different longitudinal and angular positions along the waveguide, wherein the microphones are configured to measure the sound pressure inside the duct (3), the microphones being configured to provide respective microphone signals representative of the measured sound pressure;
   - a signal processing unit (13) configured to process the microphone signals so as to provide at least one measure representative of the acoustical quality of the sound source.

2. Module as claimed in claim 1, wherein the signal processing unit (13) is configured to determine from the microphone signals that an acoustical failure has occurred when the measure exceeds a predetermined threshold value.

3. Module according to any of the preceding claims, wherein the signal processing unit (13) is configured to determine from the microphone signals a first wave field component representative of the forward propagating zero order waves and a second wave field component representative of the backward propagating zero order waves and wherein the signal processing unit is configured to determine a measure representative of an acoustical failure of the sound source based on the first wave field component and second wave field component and/or wherein the signal processing unit (13) is configured to determine from the microphone signals a first wave field component representative of the forward propagating zero order waves, a second wave field component representative of the backward propagating zero order waves, a third wave field component representative of the forward propagating higher order waves and a fourth wave field component representative of the backward propagating higher order waves and wherein the signal processing unit is configured to determine a measure representative of an acoustical failure of the sound source based on the first wave field component, the second wave field component, the third wave field component and the fourth wave field component and/or wherein the signal processing unit is configured to determine a measure for the forward zero order waves and/or a measure for the backward zero order waves in the duct, wherein the determination of the acoustical failure is made on basis of the measure for the forward zero order waves, on the measure for the backward zero order waves or from both measures and/or wherein the signal processing unit is configured to determine a measure for the forward higher order waves and/or a measure for the backward higher order waves in the duct, wherein the determination of the acoustical failure is made on basis of the measure for the forward higher order waves, on the measure for the backward higher order waves or from both measures.

4. Module as claimed in any of the preceding claims, the sound source being configured to vibrate in a first vibration mode and in one or more second vibration modes for generating zero order and further order sound waves respectively, wherein signal processing unit is configured to process the at least one microphone signal so as to provide measures for respectively the zero order waves and higher order waves in the duct and to determine that an acoustical failure has occurred when the measure for the zero order waves and/or the higher order waves exceeds one or more predetermined threshold values.

5. Module as claimed in any of the preceding claims, wherein absorbing material is arranged at the first end of the duct for absorbing incoming sound waves and/or
   wherein the wall (11) of the waveguide comprises a plurality of openings configured to accommodate microphones, the microphones being configured to provide respective microphone signals representative of the measured local sound pressures.

6. Module according to any of the preceding claims, wherein the first vibration mode corresponds to a piston vibration mode wherein the sound source generates essentially plane waves in the duct of the waveguide and wherein the one or more second vibration modes of the sound source correspond to one or more rocky vibration modes wherein the sound source generates essentially higher order waves in the duct of the waveguide and/or
   wherein the sound source is configured to also vibrate in a third vibration mode corresponding to bending vibration modes of the sound source and wherein the maximum radius of the duct of the waveguide is such that the waves produced by the third vibration mode of the sound source are outside the frequency range of interest.

7. Module according to any of the preceding claims, wherein the sound source is a micro-speaker, for instance having a diameter of 2 cm or less and/or wherein the number of microphones is at least seven, more preferably at least eleven microphones, wherein the microphones are preferably arranged at far field positions only or wherein the microphones are preferably arranged at both near field and far field positions.

8. Module according to any of the preceding claims, wherein the wave guide has an elongated shape and/or the duct of the waveguide has a generally rectangular or circular cross-section and/or wherein the microphone signals are representative of the local sound pressure and/or wherein the processing of the microphone signals involves decomposing the wave field measured by the set of microphones into at least the following waves field components:

- forward propagating plane waves;
- backward propagating plane waves;
- forward propagating higher order waves;
- backward propagating higher order waves;

wherein the decomposition preferably comprises a non-linear optimization, for instance using a least squares optimization norm;
and/or
wherein the processing unit is configured to determine the acoustical performance of the sound source on basis of the measure for the zero order waves, preferably on a measure for the zero order forward waves.

9. Method of assessing acoustical quality, for instance detecting acoustical failure, of a sound source (18), the method comprising:

- causing the sound source (18) to generating zero order and further order sound waves in a waveguide (2);
- measuring the sound pressure at at least three different longitudinal and angular positions along the waveguide (2) using at least three microphones (8-N; 21-27; 31-37), the at least three microphones providing respective microphone signals representative of the measured local sound pressure;
- processing the microphone signals to generate at least one measure representative of the acoustical quality of the sound source.

10. Method according to claim 9, comprising:

- determining that an acoustical failure has occurred when the measure exceeds a predetermined threshold value.

11. Method according to claim 9 or 10, comprising:

- determining from the microphone signals a first wave field component representative of the forward propagating zero order waves and a second wave field component representative of the backward propagating zero order waves;
- determining a measure representative of an acoustical failure of the sound source based on the first wave field component and second wave field component;

and/or comprising:

- determining from the microphone signals a first wave field component representative of the forward propagating zero order waves, a second wave field component representative of the backward propagating zero order waves, a third wave field component representative of the forward propagating higher order waves and a fourth wave field component representative of the backward propagating higher order waves;
- determining a measure representative of an acoustical failure of the sound source based on the first wave field component, the second wave field component, the third wave field component. and the fourth wave field component.

12. Method according to any of the claims 9-11, comprising:

- processing the at least one microphone signal so as to provide measures for the zero order waves and/or higher order waves in the duct; and

- determining that an acoustical failure has occurred when the measure for the zero order waves and/or the higher order waves exceed one or more predetermined threshold values and/or comprising:
- measuring the sound pressure at a plurality of positions in the waveguide using a plurality of microphones, the microphones providing respective microphone signal representative of the local sound pressure;
- processing the microphone signals from the plurality of microphones to generate one or more measures for the zero-order and/or higher order waves in the waveguide;
- comparing the one or more measures with respective threshold values;
- determining that that an acoustical failure has occurred based on at least one of the measures;

and/or further comprising determining a measure for the forward zero order waves propagating from the sound source into the waveguide and/or a measure for the backward zero order waves propagating towards the sound source, wherein the determination of the acoustical failure is made on basis of the measure for the forward zero order waves and/or the measure for the backward zero order waves and/or further comprising:

- determining a measure for the forward higher order waves propagating from the sound source into the waveguide and/or a measure for the backward higher order waves propagating towards the sound source, wherein the determination of the acoustical failure is made on basis of the measure for the forward higher order waves and/or the measure for the backward higher order waves.

13. Method as claimed in any of claims 9-12, wherein the method comprises:

- measuring the sound pressure at at least seven or at least eleven different positions and/or
- measuring the sound pressure at far field positions only, at near field positions only or both at far and near field positions and/or wherein the method comprises:.
- measuring the wave field inside the waveguide by the microphones;
- decomposing the wave field into at least the following wave field components:
- forward propagating plane waves;
- backward propagating plane waves;
- forward propagating higher order waves;
- backward propagating higher order waves;

and/or wherein the method comprises:

- determining measures for each of the decomposed wave field components, preferably determining measures for the pressure amplitudes associated with each of the wave field components;

and/or wherein the method comprises decomposing the wave field based on the microphone signals comprises solving the wave equation by a non-linear optimization procedure, for instance a least squares optimization norm.

14. System for assessing acoustical quality, for instance detecting acoustical failure, of a sound source, the system comprising:

- a module (1;50,51) according to any of the claims 1-8;
- an assembly line (40) for assembling electronic devices, wherein an electronic device comprises a sound source (18), the assembly line comprising:
- a conveyor (41) for transporting the electronic device along one or more assembly stations (42,44,47,52) and along the module (1);
- a pick-and-place unit (47) for picking up a sound source transported along the module and placing the same in the sound source support (7) of the module;

wherein the module is arranged to provide at least one measure representative of the acoustical quality of the sound source placed in the sound source support.

15. System as claimed in claim 14, wherein the pick and place unit (47) is configured to place the sound source back on the conveyor to allow further transport and/or wherein the system comprises a removal unit for removing at least the sound source from the assembly line when a failure has been detected and/or wherein the system comprises:

- a sorter unit for sorting the sound sources into different quality categories and/or failure modes based on the determined acoustical quality; and/or
- a packaging unit for packaging into packaging material.

**Patentansprüche**

1. Modul (1;50,51) zum Bewerten akustischer Qualität, zum Beispiel zum Detektieren akustischen Versagens, von einer Schallquelle (18), wobei das Modul aufweist:

   - einen Wellenleiter (2), welcher einen Kanal (3) aufweist, der ein erstes Ende und ein zweites Ende hat, wobei ein Schallquellen-Halteteil (7) angeordnet ist an dem zweiten Ende des Kanals zum Unterstützen der Schallquelle während der Bewertung der akustischen Qualität,
   - mindestens drei Mikrofone (8-N; 21-27; 31-37), welche angeordnet sind an mindestens drei verschiedenen Längs- und Winkelpositionen entlang des Wellenleiters, wobei die Mikrofone eingerichtet sind, um den Schalldruck innerhalb des Kanals (3) zu messen, wobei die Mikrofone eingerichtet sind, um jeweilige Mikrofonsignale bereitzustellen, die repräsentativ sind für den gemessenen Schalldruck;
   - eine Signal-Verarbeitungs-Einheit (13), die eingerichtet ist, um die Mikrofonsignale zu verarbeiten, um mindestens ein Maß bereitzustellen, welches repräsentativ ist für die akustische Qualität der Schallquelle.

2. Modul gemäß Anspruch 1, wobei die Signal-Verarbeitungs-Einheit (13) eingerichtet ist, um aus den Mikrofonsignalen zu ermitteln, dass ein akustisches Versagen aufgetreten ist, wenn das Maß einen vorbestimmten Schwellwert übersteigt.

3. Modul gemäß einem der vorherigen Ansprüche, wobei die Signal-Verarbeitungs-Einheit (13) eingerichtet ist, um aus den Mikrofonsignalen zu ermitteln eine erste Wellenfeldkomponente, die repräsentativ ist für die vorwärts propagierenden Wellen nullter Ordnung, und eine zweite Wellenfeldkomponente, die repräsentativ ist für die rückwärts propagierenden Wellen nullter Ordnung, und wobei die Signal-Verarbeitungs-Einheit eingerichtet ist, um ein Maß zu ermitteln, welches repräsentativ ist für ein akustisches Versagen der Schallquelle basierend auf der ersten Wellenfeldkomponente und der zweiten Wellenfeldkomponente, und/oder
   wobei die Signal-Verarbeitungs-Einheit (13) eingerichtet ist, um aus den Mikrofonsignalen zu ermitteln eine erste Wellenfeldkomponente, die repräsentativ ist für die vorwärts propagierenden Wellen nullter Ordnung, eine zweite Wellenfeldkomponente, die repräsentativ ist für die rückwärts propagierenden Wellen nullter Ordnung, eine dritte Wellenfeldkomponente, die repräsentativ ist für die vorwärts propagierenden Wellen höherer Ordnung, und eine vierte Wellenfeldkomponente, die repräsentativ ist für die rückwärts propagierenden Wellen höherer Ordnung, und wobei die Signal-Verarbeitungs-Einheit eingerichtet ist, um ein Maß zu ermitteln, welches repräsentativ ist für ein akustisches Versagen der Schallquelle basierend auf der ersten Wellenfeldkomponente, der zweiten Wellenfeldkomponente, der dritten Wellenfeldkomponente und der vierten Wellenfeldkomponente, und/oder
   wobei die Signal-Verarbeitungs-Einheit eingerichtet ist, um zu ermitteln ein Maß für die Vorwärtswellen nullter Ordnung und/oder ein Maß für die Rückwärtswellen nullter Ordnung in dem Kanal, wobei die Ermittlung des akustischen Versagens gemacht wird auf Basis des Maßes für die Vorwärtswellen nullter Ordnung, auf dem Maß für die Rückwärtswellen nullter Ordnung oder aus beiden Maßen, und/oder wobei die Signal-Verarbeitungs-Einheit eingerichtet ist, um zu ermitteln ein Maß für die Vorwärtswellen höherer Ordnung und/oder ein Maß für die Rückwärtswellen höherer Ordnung in dem Kanal, wobei die Ermittlung des akustischen Versagens gemacht wird auf Basis des Maßes für die Vorwärtswellen höherer Ordnung, auf dem Maß für die Rückwärtswellen höherer Ordnung oder aus beiden Maßen.

4. Modul gemäß einem der vorherigen Ansprüche, wobei die Schallquelle eingerichtet ist, um in einer ersten Schwingungsmode und in einer oder mehreren zweiten Schwingungsmoden zu schwingen zum Erzeugen von Schallwellen nullter Ordnung bzw. weiterer Ordnung, wobei die Signal-Verarbeitungs-Einheit eingerichtet ist, um das mindestens eine Mikrofonsignal zu verarbeiten, um Maße bereitzustellen für die Wellen nullter Ordnung bzw. die Wellen höherer Ordnung in dem Kanal und um zu ermitteln, dass ein akustisches Versagen aufgetreten ist, wenn das Maß für die Wellen nullter Ordnung und/oder die Wellen höherer Ordnung einen oder mehrere vorbestimmte Schwellwerte übersteigt.

5. Modul gemäß einem der vorherigen Ansprüche, wobei Absorptionsmaterial angeordnet ist an dem ersten Ende des Kanals zum Absorbieren von eingehenden Schallwellen, und/oder wobei die Wand (11) des Wellenleiters eine Mehrzahl von Öffnungen aufweist, die eingerichtet sind, um Mikrofone unterzubringen, wobei die Mikrofone eingerichtet sind, um jeweilige Mikrofonsignale bereitzustellen, die repräsentativ sind für die gemessenen lokalen Schalldrücke.

**6.** Modul gemäß einem der vorherigen Ansprüche, wobei die erste Schwingungsmode zu einer Kolben-Schwingungsmode korrespondiert, wobei die Schallquelle im Wesentlichen ebene Wellen erzeugt in dem Kanal des Wellenleiters, und wobei die eine oder die mehreren zweiten Schwingungsmoden der Schallquelle zu einer oder mehreren Schaukel-Schwingungsmoden korrespondieren, wobei die Schallquelle im Wesentlichen Wellen höherer Ordnung erzeugt in dem Kanal des Wellenleiters, und/oder
wobei die Schallquelle eingerichtet ist, auch in einer dritten Schwingungsmode zu schwingen, die zu Deformations-Schwingungsmoden der Schallquelle korrespondiert, und wobei der maximale Radius des Kanals des Wellenleiters dergestalt ist, dass die Wellen, die mittels der dritten Schwingungsmode der Schallquelle erzeugt werden, außerhalb des interessanten Frequenzbereichs sind.

**7.** Modul gemäß einem der vorherigen Ansprüche, wobei die Schallquelle ein MikroLautsprecher ist, der zum Beispiel einen Durchmesser von 2 cm oder weniger hat, und/oder wobei die Zahl der Mikrofone mindestens sieben ist, vorzugsweise mindestens elf Mikrofone, wobei die Mikrofone vorzugweise angeordnet sind nur an Fernfeldpositionen, oder wobei die Mikrofone vorzugsweise angeordnet sind an beidem, Nahfeld- und Fernfeldpositionen.

**8.** Modul gemäß einem der vorherigen Ansprüche, wobei der Wellenleiter eine längliche Form hat, und/oder wobei der Kanal des Wellenleiters einen im Allgemeinen rechteckigen oder kreisförmigen Querschnitt hat, und/oder wobei die Mikrofonsignale repräsentativ sind für den lokalen Schalldruck, und/oder wobei das Verarbeiten der Mikrofonsignale einschließt das Zerlegen des Wellenfeldes, welches gemessen wird mittels des Satzes von Mikrofonen, in mindestens die folgenden Wellenfeldkomponenten:

- vorwärts propagierende ebene Wellen,
- rückwärts propagierende ebene Wellen,
- vorwärts propagierende Wellen höherer Ordnung,
- rückwärts propagierende Wellen höherer Ordnung,

wobei das Zerlegen vorzugsweise aufweist eine nicht-lineare Optimierung, zum Beispiel unter Verwendung einer Optimierungsnorm der kleinsten Quadrate, und/oder wobei die Verarbeitungs-Einheit eingerichtet ist, um die akustische Leistung der Schallquelle zu ermitteln auf Basis des Maßes für die Wellen nullter Ordnung, vorzugsweise auf einem Maß für die Vorwärtswellen nullter Ordnung.

**9.** Verfahren zum Bewerten akustischer Qualität, zum Beispiel zum Detektieren von akustischem Versagen, von einer Schallquelle (18), wobei das Verfahren aufweist:

- Veranlassen der Schallquelle (18), um Schallwellen nullter Ordnung und weiterer Ordnung zu erzeugen in einem Wellenleiter (2),
- Messen des Schalldrucks an mindestens drei verschiedenen Längs- und Winkelpositionen entlang des Wellenleiters (2) unter Verwendung von mindestens drei Mikrofonen (8-N; 21-27; 31-37), wobei die mindestens drei Mikrofone jeweilige Mikrofonsignale bereitstellen, die repräsentativ sind für den gemessenen lokalen Schalldruck,
- Verarbeiten der Mikrofonsignale, um mindestens ein Maß zu erzeugen, welches repräsentativ ist für die akustische Qualität der Schallquelle.

**10.** Verfahren gemäß Anspruch 9, welches aufweist:

- Ermitteln, dass ein akustisches Versagen aufgetreten ist, wenn das Maß einen vorbestimmten Schwellwert übersteigt.

**11.** Verfahren gemäß Anspruch 9 oder 10, welches aufweist:

- Ermitteln von einer ersten Wellenfeldkomponente, die repräsentativ ist für die vorwärts propagierenden Wellen nullter Ordnung, und von einer zweiten Wellenfeldkomponente, die repräsentativ ist für die rückwärts propagierenden Wellen nullter Ordnung, aus den Mikrofonsignalen,
- Ermitteln eines Maßes, welches repräsentativ ist für ein akustisches Versagen der Schallquelle basierend auf der ersten Wellenfeldkomponente und der zweiten Wellenfeldkomponente,

und/oder welches aufweist:

- Ermitteln einer ersten Wellenfeldkomponente, die repräsentativ ist für die vorwärts propagierenden Wellen nullter Ordnung, einer zweiten Wellenfeldkomponente, die repräsentativ ist für die rückwärts propagierenden Wellen nullter Ordnung, einer dritten Wellenfeldkomponente, die repräsentativ ist für die vorwärts propagierenden Wellen höherer Ordnung, und einer vierten Wellenfeldkomponente, die repräsentativ ist für die rückwärts propagierenden Wellen höherer Ordnung aus den Mikrofonsignalen,
- Ermitteln eines Maßes, welches repräsentativ ist für ein akustisches Versagen der Schallquelle basierend auf der ersten Wellenfeldkomponente, der zweiten Wellenfeldkomponente, der dritten Wellenfeldkomponente und der vierten Wellenfeldkomponente.

12. Verfahren gemäß einem der Ansprüche 9 bis 11, welches aufweist:

- Verarbeiten des mindestens einen Mikrofonsignals, um Maße bereitzustellen für die Wellen nullter Ordnung und/oder Wellen höherer Ordnung in dem Kanal, und
- Ermitteln, dass ein akustisches Versagen aufgetreten ist, wenn das Maß für die Wellen nullter Ordnung und/oder die Wellen höherer Ordnung einen oder mehrere vorbestimmte Schwellwerte überschreitet, und/oder welches aufweist:

- Messen des Schalldrucks an einer Mehrzahl von Positionen in dem Wellenleiter unter Verwendung einer Mehrzahl von Mikrofonen, wobei die Mikrofone jeweiliges Mikrofonsignal bereitstellen, das repräsentativ ist für den lokalen Schalldruck,
- Verarbeiten der Mikrofonsignale von der Mehrzahl von Mikrofonen, um ein oder mehrere Maße zu erzeugen für die Wellen nullter Ordnung und/oder höherer Ordnung in dem Wellenleiter,
- Vergleichen des einen oder der mehreren Maße mit jeweiligen Schwellwerten,
- Ermitteln, dass ein akustisches Versagen aufgetreten ist basierend auf mindestens einem der Maße,

und/oder welches ferner aufweist Ermitteln eines Maßes für die Vorwärtswellen nullter Ordnung, welche von der Schallquelle in den Wellenleiter propagieren, und/oder eines Maßes für die Rückwärtswellen nullter Ordnung, die in Richtung der Schallquelle propagieren, wobei die Ermittlung des akustischen Versagens gemacht wird auf Basis des Maßes für die Vorwärtswellen nullter Ordnung und/oder des Maßes für die Rückwärtswellen nullter Ordnung, und/oder welches ferner aufweist:

- Ermitteln eines Maßes für die Vorwärtswellen höherer Ordnung, die von der Schallquelle in den Wellenleiter propagieren, und/oder eines Maßes für die Rückwärtswellen höherer Ordnung, die in Richtung der Schallquelle propagieren, wobei das Ermitteln des akustischen Versagens gemacht wird auf Basis des Maßes für die Vorwärtswellen höherer Ordnung und/oder des Maßes für die Rückwärtswellen höherer Ordnung.

13. Verfahren gemäß einem der Ansprüche 9 bis 12, wobei das Verfahren aufweist:

- Messen des Schalldrucks an mindestens sieben oder mindestens elf verschiedenen Positionen und/oder
- Messen des Schalldrucks nur an Fernfeldpositionen, nur an Nahfeldpositionen oder an beidem, Fern- und Nahfeldpositionen, und/oder wobei das Verfahren aufweist:
- Messen des Wellenfeldes innerhalb des Wellenleiters mittels der Mikrofone,
- Zerlegen des Wellenfeldes in mindestens die folgenden Wellenfeldkomponenten:
- vorwärts propagierende ebene Wellen,
- rückwärts propagierende ebene Wellen,
- vorwärts propagierende Wellen höherer Ordnung,
- rückwärts propagierende Wellen höherer Ordnung,

und/oder wobei das Verfahren aufweist:

- Ermitteln von Maßen für jede von den zerlegten Wellenfeldkomponenten, vorzugsweise das Ermitteln von Maßen für die Druckamplituden, die assoziiert sind mit jeder von den Wellenfeldkomponenten,

und/oder wobei das Verfahren aufweist das Zerlegen des Wellenfeldes basierend auf den Mikrofonsignalen, welches aufweist das Lösen der Wellengleichung mittels eines nicht-linearen Optimierungsverfahrens, zum Beispiel einer Optimierungsnorm der kleinsten Quadrate.

**14.** System zum Bewerten akustischer Qualität, zum Beispiel zum Detektieren von akustischem Versagen, einer Schallquelle, wobei das System aufweist:

- ein Modul (1;50,51) gemäß einem der Ansprüche 1 bis 8,
- ein Montageband (40) zum Zusammenbauen von elektronischen Vorrichtungen, wobei eine elektronische Vorrichtung eine Schallquelle (18) aufweist, wobei das Montageband aufweist:
- ein Transportmittel (41) zum Transportieren der elektronischen Vorrichtung entlang einer oder mehrerer Montage-Stationen (42,44,47,52) und entlang des Moduls (1),
- eine Einheit zur Aufnahme und Platzierung (47) zum Aufnehmen einer Schallquelle, die entlang des Moduls transportiert wird, und zum Platzieren derselben in dem Schallquellen-Halteteil (7) des Moduls,

wobei das Modul eingerichtet ist, um mindestens ein Maß bereitzustellen, das repräsentativ ist für die akustische Qualität der Schallquelle, welche in dem Schallquellen-Halteteil platziert ist.

**15.** System gemäß Anspruch 14, wobei die Einheit zur Aufnahme und Platzierung (47) eingerichtet ist, um die Schallquelle zurück auf dem Transportmittel zu platzieren, um weiteren Transport zu ermöglichen, und/oder wobei das System aufweist eine Entfernungs-Einheit zum Entfernen von mindestens der Schallquelle von dem Montageband, wenn ein Versagen detektiert wurde, und/oder wobei das System aufweist:

- eine Sortierer-Einheit zum Sortieren der Schallquellen in verschiedene Qualitäts-Kategorien und/oder Modi des Versagens basierend auf der ermittelten akustischen Qualität, und/oder
- eine Verpackungs-Einheit zum Verpacken in Verpackungsmaterial.

**Revendications**

**1.** Module (1 ; 50, 51) destiné à l'évaluation de la qualité acoustique, par exemple la détection d'une défaillance acoustique, d'une source sonore (18), le module comprenant :

- un guide d'ondes (2) comprenant un conduit (3) ayant une première extrémité et une seconde extrémité, dans lequel un support de source sonore (7) est disposé à la seconde extrémité du conduit afin de supporter la source sonore lors de l'évaluation de la qualité acoustique ;
- au moins trois microphones (8-N ; 21-27 ; 31-37) disposés à au moins trois différentes positions angulaires et longitudinales le long du guide d'ondes, dans lesquels les microphones sont configurés pour mesurer la pression sonore à l'intérieur du conduit (3), les microphones étant configurés pour émettre des signaux respectifs de microphones représentatifs de la pression sonore mesurée ;
- une unité de traitement de signaux (13) configurée pour traiter les signaux de microphones de façon à fournir au moins une mesure représentative de la qualité acoustique de la source sonore.

**2.** Module selon la revendication 1, dans lequel l'unité de traitement de signaux (13) est configurée pour déterminer d'après les signaux des microphones qu'une défaillance acoustique s'est produite lorsque la mesure dépasse une valeur de seuil prédéterminée.

**3.** Module selon l'une quelconque des revendications précédentes, dans lequel l'unité de traitement de signaux (13) est configurée pour déterminer d'après les signaux des microphones un premier composant de champ d'ondes représentatif des ondes d'ordre zéro se propageant vers l'avant et un deuxième composant de champ d'ondes représentatif des ondes d'ordre zéro se propageant vers l'arrière et dans lequel l'unité de traitement de signaux est configurée pour déterminer une mesure représentative d'une défaillance acoustique de la source sonore d'après le premier composant de champ d'ondes et le deuxième composant de champ d'ondes et/ou dans lequel l'unité de traitement de signaux (13) est configurée pour déterminer d'après les signaux des microphones un premier composant de champ d'ondes représentatif des ondes d'ordre zéro se propageant vers l'avant, un deuxième composant de champ d'ondes représentatif des ondes d'ordre zéro se propageant vers l'arrière, un troisième composant de champ d'ondes représentatif des ondes d'ordre supérieur se propageant vers l'avant et un quatrième composant de champ d'ondes représentatif des ondes d'ordre supérieur se propageant vers l'arrière et dans lequel l'unité de traitement de signaux est configurée pour déterminer une mesure représentative d'une défaillance acoustique de la source sonore d'après le premier composant de champ d'ondes, le deuxième composant de champ d'ondes, le troisième composant de champ d'ondes et le quatrième composant de champ d'ondes, et/ou dans lequel l'unité de traitement de signaux est configurée pour déterminer une mesure pour les ondes d'ordre zéro avant et/ou une mesure pour les ondes d'ordre zéro arrière dans le conduit, dans lequel la détermination de la défaillance acoustique est réalisée sur la base de la mesure pour les ondes d'ordre zéro avant, de la mesure pour les ondes d'ordre zéro arrière ou des deux mesures et/ou dans lequel l'unité de traitement de signaux est configurée pour déterminer une mesure pour les ondes d'ordre supérieur avant et/ou une mesure pour les ondes d'ordre supérieur arrière dans le conduit, dans lequel la détermination de la défaillance acoustique est réalisée sur la base de la mesure pour les ondes d'ordre supérieur avant, de la mesure pour les ondes d'ordre supérieur arrière ou des deux mesures.

**4.** Module selon l'une quelconque des revendications précédentes, la source sonore étant configurée pour vibrer selon un premier mode de vibration et selon un ou plusieurs deuxièmes modes de vibration pour générer des ondes sonores d'ordre zéro et d'ordre supérieur respectivement, dans lequel l'unité de traitement de signaux est configurée pour traiter l'au moins un signal de microphone de manière à fournir des mesures pour respectivement les ondes d'ordre zéro et les ondes d'ordre supérieur dans le conduit et pour déterminer qu'une défaillance acoustique s'est produite lorsque la mesure pour les ondes d'ordre zéro et/ou les ondes d'ordre supérieur dépasse une ou plusieurs valeurs de seuil prédéterminées.

**5.** Module selon l'une quelconque des revendications précédentes, dans lequel un matériau absorbant est disposé à la première extrémité du conduit pour absorber les ondes sonores entrantes et/ou dans lequel la paroi (11) du guide d'ondes comprend une pluralité d'ouvertures configurées pour recevoir des microphones, les microphones étant configurés pour émettre des signaux respectifs de microphones représentatifs des pressions sonores locales mesurées.

**6.** Module selon l'une quelconque des revendications précédentes, dans lequel le premier mode de vibration correspond à un mode de vibration piston dans lequel la source sonore génère essentiellement des ondes planes dans le conduit du guide d'ondes et dans lequel les un ou plusieurs deuxièmes modes de vibration de la source sonore correspondent à un ou plusieurs modes de vibrations fortes dans lesquels la source sonore génère essentiellement des ondes d'ordre supérieur dans le conduit du guide d'ondes et/ou
dans lequel la source sonore est configurée pour vibrer également selon un troisième mode de vibration correspondant à des modes de vibration en flexion de la source sonore et dans lequel le rayon maximal du conduit du guide d'ondes est tel que les ondes produites par le troisième mode de vibration de la source sonore se situent hors de la plage de fréquences d'intérêt.

**7.** Module selon l'une quelconque des revendications précédentes, dans lequel la source sonore est une mini-enceinte, ayant par exemple un diamètre de 2 cm ou moins et/ou dans lequel le nombre de microphones est d'au moins sept, plus préférablement au moins onze microphones, dans lequel les microphones sont de préférence disposés uniquement à des positions éloignées ou dans lequel les microphones sont de préférence disposés à la fois à des positions éloignées et des positions rapprochées.

**8.** Module selon l'une quelconque des revendications précédentes, dans lequel le guide d'ondes a une forme allongée et/ou le conduit du guide d'ondes possède une section transversale généralement rectangulaire ou circulaire et/ou dans lequel les signaux de microphones sont représentatifs de la pression sonore locale et/ou dans lequel le traitement des signaux des microphones inclut la décomposition du champ d'ondes mesuré par l'ensemble des microphones en au moins les composants champ d'ondes suivants:

    - ondes planes se propageant vers l'avant;
    - ondes planes se propageant vers l'arrière;
    - ondes d'ordre supérieur se propageant vers l'avant;
    - ondes d'ordre supérieur se propageant vers l'arrière;

dans lequel la décomposition comprend de préférence une optimisation non linéaire, utilisant par exemple une norme d'optimisation des moindres carrés;
et/ou
dans lequel l'unité de traitement est configurée pour déterminer la performance acoustique de la source sonore d'après la mesure pour les ondes d'ordre zéro, de préférence, une mesure pour les ondes d'ordre zéro se propageant vers l'avant.

**9.** Procédé d'évaluation de la qualité acoustique, détectant par exemple une défaillance acoustique, d'une source sonore (18), le procédé comprenant:

- l'entraînement de la source sonore (18) à générer des ondes d'ordre zéro et d'ordre supérieur dans un guide d'ondes (2);
- la mesure de la pression sonore à au moins trois différentes positions angulaires et longitudinales le long du guide d'ondes (2) en employant au moins trois microphones (8-N ; 21-27 ; 31-37), les au moins trois microphones émettant des signaux de microphones respectifs représentatifs de la pression sonore locale mesurée;
- le traitement des signaux de microphones pour générer au moins une mesure représentative de la qualité acoustique de la source sonore.

**10.** Procédé selon la revendication 9 comprenant :

- la détermination du fait qu'une défaillance acoustique s'est produite lorsque la mesure dépasse une valeur de seuil prédéterminée.

**11.** Procédé selon la revendication 9 ou 10 comprenant:

- la détermination d'après les signaux des microphones d'un premier composant de champ d'ondes représentatif des ondes d'ordre zéro se propageant vers l'avant et d'un deuxième composant de champ d'ondes représentatif des ondes d'ordre zéro se propageant vers l'arrière;
- la détermination d'une mesure représentative d'une défaillance acoustique de la source sonore d'après le premier composant de champ d'ondes et le second composant de champ d'ondes ; et/ou comprenant:

  - la détermination d'après les signaux des microphones d'un premier composant de champ d'ondes représentatif des ondes d'ordre zéro se propageant vers l'avant, d'un deuxième composant de champ d'ondes représentatif des ondes d'ordre zéro se propageant vers l'arrière, d'un troisième composant de champ d'ondes représentatif des ondes d'ordre supérieur se propageant vers l'avant et d'un quatrième composant de champ d'ondes représentatif des ondes d'ordre supérieur se propageant vers l'arrière;
  - la détermination d'une mesure représentative d'une défaillance acoustique de la source sonore d'après le premier composant de champ d'ondes, le deuxième composant de champ d'ondes, le troisième composant de champ d'ondes, et le quatrième composant de champ d'ondes.

**12.** Procédé selon l'une quelconque des revendications 9 à 11 comprenant:

- le traitement d'au moins un signal de microphone de manière à fournir des mesures des ondes d'ordre zéro et/ou des ondes d'ordre supérieur dans le conduit; et
- la détermination du fait qu'une défaillance acoustique s'est produite lorsque la mesure pour les ondes d'ordre zéro et/ou les ondes d'ordre supérieur dépasse une ou plusieurs valeurs de seuil prédéterminées et/ou comprenant:

  - la mesure de la pression sonore à une pluralité de positions dans le guide d'ondes en employant une pluralité de microphones, les microphones émettant un signal de microphone respectif représentatif de la pression sonore locale;
  - le traitement des signaux de microphones provenant de la pluralité de microphones pour générer une ou plusieurs mesures pour les ondes d'ordre zéro et/ou d'ordre supérieur dans le guide d'ondes;
  - la comparaison des une ou plusieurs mesures avec les valeurs de seuil respectives;
  - la détermination du fait qu'une défaillance acoustique s'est produite d'après au moins l'une des mesures;

et/ou comprenant en outre la détermination d'une mesure pour les ondes d'ordre zéro avant se propageant depuis la source sonore dans le guide d'ondes et/ou la mesure pour les ondes d'ordre zéro arrière se propageant vers la source sonore, dans laquelle la détermination de la défaillance acoustique est réalisée d'après la mesure pour les ondes d'ordre zéro avant et/ou la mesure pour les ondes d'ordre zéro arrière et/ou comprenant en outre:

  - la détermination d'une mesure pour les ondes d'ordre supérieur avant se propageant depuis la source sonore dans le guide d'ondes et/ou d'une mesure pour les ondes d'ordre supérieur arrière se propageant vers la source sonore, dans laquelle la détermination de la défaillance acoustique est réalisée d'après la mesure des ondes d'ordre supérieur avant et/ou la mesure des ondes d'ordre supérieur arrière.

**13.** Procédé selon l'une quelconque des revendications 9 à 12, dans lequel le procédé comprend:

- la mesure de la pression sonore à au moins sept ou au moins onze positions différentes et/ou

- la mesure de la pression sonore uniquement à des positions éloignées, uniquement à des positions rapprochées ou à la fois à des positions éloignées et des positions rapprochées, et/ou dans lequel le procédé comprend:

    - la mesure du champ d'ondes à l'intérieur du guide d'ondes par les microphones;

    - la décomposition du champ d'ondes en au moins les composants de champ d'ondes suivants:

        - ondes planes se propageant vers l'avant;

        - ondes planes se propageant vers l'arrière;

        - ondes d'ordre supérieur se propageant vers l'avant;

        - ondes d'ordre supérieur se propageant vers l'arrière;

et/ou dans lequel le procédé comprend:

    - la détermination de mesures pour chacun des composants de champ d'ondes décomposés, de préférence la détermination de mesures pour les amplitudes de pression associées à chacun des composants de champ d'ondes;

et/ou dans lequel le procédé comprend la décomposition du champ d'ondes d'après les signaux de microphones, comprend la résolution de l'équation d'onde par une procédure d'optimisation non linéaire, par exemple une norme d'optimisation des moindres carrés.

**14.** Système destiné à l'évaluation de la qualité acoustique, par exemple la détection d'une défaillance acoustique, d'une source sonore, le système comprenant:

    - un module (1 ; 50, 51) selon l'une quelconque des revendications 1 à 8 ;

    - une chaîne de montage (40) pour assembler des appareils électroniques, dans laquelle un appareil électronique comprend une source sonore (18), la chaîne de montage comprenant:

        - un convoyeur (41) pour transporter l'appareil électronique le long d'une ou plusieurs stations d'assemblage (42, 44, 47, 52) et le long du module (1);

        - une unité de préhension et de positionnement (47) pour prendre une source sonore transportée le long du module et la positionner dans le support de source sonore (7) du module; dans lequel le module est disposé pour fournir au moins une mesure représentative de la qualité acoustique de la source sonore dans le support de source sonore.

**15.** Système selon la revendication 14, dans lequel l'unité de préhension et de positionnement (47) est configurée pour remettre la source sonore sur le convoyeur afin de permettre son transport ultérieur et/ou dans lequel le système comprend une unité de retrait pour retirer au moins la source sonore de la chaîne de montage lorsqu'une défaillance a été détectée et/ou dans lequel le système comprend:

    - une unité de triage pour trier les sources sonores selon différentes catégories de qualité et/ou modes de défaillance d'après la qualité acoustique déterminée; et/ou

    - une unité d'emballage pour l'emballage dans du matériel d'emballage.

FIG. 1

FIG. 2

## FIG. 3

## FIG. 4

FIG. 5A

FIG. 5B

FIG. 6A

FIG. 6B

FIG. 7A

FIG. 7B

FIG. 8A

FIG. 8B

EP 3 056 023 B1

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009285405 A
- US 5567863 A